# EUROPÄISCHE PATENTSCHRIFT

(11) **EP 3 941 674 B1**
(45) Veröffentlichungstag und Bekanntmachung des Hinweises auf die Patenterteilung: **30.08.2023**
(21) Anmeldenummer: 20717552.2
(22) Anmeldetag: 18.03.2020
(51) Int. Cl.: B23K 9/095, B23K 9/10, B23K 9/32

(54) **BEDIENPANEL FÜR EIN SCHWEISSGERÄT ; SCHWEISSGERÄT MIT EINEM SOLCHEN PANEL ; VERFAHREN ZUM KONFIGURIEREN VON SCHWEISSPARAMETER EINES SOLCHEN SCHWEISSGERÄTES**
CONTROL PANEL FOR A WELDER ; WELDER WITH SUCH PANEL ; METHOF OF CONFIGURATING OF WELDING PARAMETERS OF SUCH A WELDER
PANNEAU DE COMMANDE POUR APPAREIL DE SOUDAGE ; APPAREIL DE SOUDAGE AVEC UN TEL PANNEAU ; METHODE DE CONFIGURATION DE PARAMETRES DE SOUDAGE D'UN TEL APPAREIL DE SOUDAGE

(30) Priorität: 18.03.2019 EP 19163549
(43) Veröffentlichungstag der Anmeldung: 26.01.2022
(73) Patentinhaber: FRONIUS INTERNATIONAL GmbH, 4643 Pettenbach (AT)
(72) Erfinder: LATTNER, Peter, 4643 Pettenbach (AT); NEUBACHER, Günther, 4643 Pettenbach (AT); ECKL, Bernhard, 4643 Pettenbach (AT); STRASSER, Manuel, 4643 Pettenbach (AT); HÖRZING, Axel, 4643 Pettenbach (AT)
(74) Vertreter: Isarpatent
(86) Internationale Anmeldenummer: PCT/EP2020/000071
(87) Internationale Veröffentlichungsnummer: WO 2020/187442

(56) Entgegenhaltungen:
- WO-A1-2018/088372
- DE-A1- 19 733 638
- DE-U1- 9 301 390
- DE-U1-202006 009 014
- US-A1- 2004 232 128
- US-A1- 2009 071 949
- US-A1- 2013 112 673

## Beschreibung

Die Erfindung betrifft ein Bedienpanel für ein Schweißgerät sowie ein Verfahren zum Konfigurieren von Schweißparametern eines Schweißgerätes mittels eines Bedienpanels.

Herkömmliche Schweißgeräte verfügen über ein Bedienpanel zur Bedienung des Schweißgerätes, insbesondere zur Einstellung von Schweißparametern eines von dem Schweißgerät durchgeführten Schweißprozesses. Die wesentlichen Schweißparameter lassen sich dabei mit Tasten anwählen, mittels eines Einstellrades verändern und während des Schweißprozesses auf einer Digitalanzeige anzeigen.

Die Auswahl von Schweißparametern, insbesondere zur Einstellung eines entsprechenden Schweißparameterwertes, erfolgt dabei in der Regel mittels Tasten bzw. Tastern. Das Vorsehen derartiger Tasten auf einem herkömmlichen Bedienpanel hat einerseits den Nachteil, dass das Bedienpanel für einen Nutzer relativ unübersichtlich wird und somit die Eingabe von Schweißparametern erschwert und andererseits die Tasten auf dem Bedienpanel Raum einnehmen, sodass eine Miniaturisierung bzw. Verkleinerung des Bedienpanels, insbesondere bei tragbaren Schweißgeräten, erschwert bzw. verhindert wird.

DE 20 2006 009014 U1 offenbart den Oberbegriff der Ansprüche 1, 7 und 8.

Es ist daher eine Aufgabe der vorliegenden Erfindung, ein Bedienpanel für ein Schweißgerät zu schaffen, das eine einfache und fehlerfreie Eingabe von Schweißparametern ermöglicht und wenig Fläche bei der Integration in ein Schweißgerät benötigt.

Diese Aufgabe wird erfindungsgemäß durch ein Bedienpanel für ein Schweißgerät mit den in Patentanspruch 1 angegebenen Merkmalen gelöst.

Die Erfindung schafft demnach ein Bedienpanel für ein Schweißgerät mit
einer Schweißparameteranzeigeeinheit zur Anzeige von Schweißparametern und mit
mindestens einem durch einen Nutzer manuell betätigbaren Bedienelement, wobei das Bedienpanel durch Ziehen oder Drücken des Bedienelementes zwischen einem Schweißparameter-Auswahlmodus und einem Schweißparameter-Editiermodus umschaltbar ist,
wobei in dem Schweißparameter-Auswahlmodus durch Drehen des Bedienelementes einer der Schweißparameter der Schweißparameteranzeigeeinheit auswählbar ist, und
wobei in dem Schweißparameter-Editiermodus durch Drehen des Bedienelementes ein Parameterwert eines ausgewählten Schweißparameters der Schweißparameteranzeigeeinheit einstellbar ist,
wobei das Bedienpanel nach Starten eines durch das Schweißgerät ausgeführten Schweißvorganges in einen Schweißparameter-Anzeigemodus wechselt,
wobei die Schweißparameter in der partitionierten Funktionskurve der Schweißparameteranzeigeeinheit des Bedienpanels nach Starten des Schweißvorganges in dem Schweißparameter-Anzeigemodus in verschiedenen aufeinanderfolgenden Phasen des Schweißvorganges entsprechend dem in dem Schweißparameter-Editiermodus eingestellten Parameterwert sequenziell angezeigt und zur Vornahme des Schweißvorganges durch eine Schweißstromquelle des Schweißgerätes physikalisch eingestellt werden

Das erfindungsgemäße Bedienpanel bietet den Vorteil, dass das Bedienelement sowohl für ein Umschalten zwischen zwei Betriebsmodi als auch zur Einstellung von Parameterwerten eingesetzt werden kann. Hierdurch kann sonst für weitere Bedienelemente, insbesondere Tasten oder dergleichen, benötigter Platz eingespart werden, sodass das Bedienpanel insgesamt relativ wenig Platz erfordert. Das erfindungsgemäße Bedienpanel kann somit auch an Schweißgeräten mit einem relativ kleinen Gehäuse platzsparend vorgesehen werden, insbesondere auch bei tragbaren Schweißgeräten. Weiterhin wird die Übersichtlichkeit des Bedienpanels erhöht, sodass die Auswahl von Betriebsmodi und/oder die Einstellung von Parameterwerten für einen Nutzer erleichtert wird und Eingaben zuverlässiger erfolgen.

Bei einer möglichen Ausführungsform des erfindungsgemäßen Bedienpanels weist das manuell betätigbare Bedienelement ein inkremental einstellbares Bedienrad auf.

Bei einer weiteren möglichen Ausführungsform des erfindungsgemäßen Bedienpanels wird ein Schweißparameter jeweils durch ein zugehöriges Anzeigesegment einer partitionierten Funktionskurve der Schweißparameteranzeigeeinheit angezeigt.

Bei einer weiteren möglichen Ausführungsform des erfindungsgemäßen Bedienpanels weist das Anzeigesegment der partitionierten Funktionskurve der Schweißparameteranzeigeeinheit einen transparenten Kunststoffblock auf, der von einer oder mehreren dimmbaren Leuchtmitteln, insbesondere lichtemittierenden Dioden, beleuchtbar ist.

Bei einer weiteren möglichen Ausführungsform des erfindungsgemäßen Bedienpanels ist die zu dem Nutzer hin gerichtete Oberfläche jedes transparenten Kunststoffblockes eines Anzeigesegmentes der partitionierten Funktionskurve zur Erhöhung der Lichtstreuung oberflächenbehandelt.

Entsprechend der Erfindung ist in dem Schweißparameter-Editiermodus das Anzeigesegment des ausgewählten Schweißparameters innerhalb der partitionierten Funktionskurve der Schweißparameteranzeigeeinheit durch die zugehörigen Leuchtmittel mit voller ungedimmter Leuchtkraft beleuchtet, während die Anzeigesegmente der übrigen nicht ausgewählten Schweißparameter innerhalb der partitionierten Funktionskurve der Schweißparameteranzeigeeinheit durch die zugehörigen Leuchtmittel nicht beleuchtet sind.

Entsprechend der Erfindung ist in dem Schweißparameter-Auswahlmodus das Anzeigesegment des ausgewählten Schweißparameters innerhalb der partitionierten Funktionskurve der Schweißparameteranzeigeeinheit durch die zugehörigen Leuchtmittel mit voller ungedimmter Leuchtkraft beleuchtet, während die Anzeigesegmente der übrigen nicht ausgewählten Schweißparameter innerhalb der partitionierten Funktionskurve der Schweißparameteranzeigeeinheit durch die zugehörigen Leuchtmittel mit gedimmter Leuchtkraft beleuchtet sind.

Bei einer weiteren möglichen Ausführungsform des erfindungsgemäßen Bedienpanels ist in dem Schweißparameter-Anzeigemodus das Anzeigesegment des aktuell aktiven von der Schweißstromquelle des Schweißgerätes physikalisch eingestellten Schweißparameters innerhalb der partitionierten Funktionskurve der Schweißparameteranzeigeeinheit durch die zugehörigen Leuchtmittel mit gedimmter Leuchtkraft beleuchtet.

Bei einer weiteren möglichen Ausführungsform des erfindungsgemäßen Bedienpanels weist das Bedienpanel mindestens eine Digitalanzeige zur Anzeige eines Parameterwertes eines in dem Schweißparameter-Auswahlmodus ausgewählten Schweißparameters oder eines während des Schweißvorganges von der Schweißstromquelle des Schweißgerätes aktiv eingestellten Schweißparameters auf.

Die Erfindung schafft ferner gemäß einem weiteren Aspekt ein Schweißgerät mit den in Patentanspruch 10 angegebenen Merkmalen.

Die Erfindung schafft demnach ein Schweißgerät (siehe Anspruch 7) mit einem Bedienpanel gemäß dem ersten Aspekt der Erfindung und mit einer Schweißstromquelle zur Einstellung von Schweißparametern während des Schweißvorganges entsprechend der in dem Schweißparameter-Editiermodus eingestellten Parameterwerte der in dem Schweißparameter-Auswahlmodus ausgewählten Schweißparameter.

Die Erfindung schafft ferner gemäß einem weiteren Aspekt ein Verfahren zur Konfiguration von Schweißparametern eines Schweißgerätes mit den in Patentanspruch 8 angegebenen Merkmalen.

Die Erfindung schafft demnach ein Verfahren zum Konfigurieren von Schweißparametern eines Schweißgerätes mittels eines manuell betätigbaren Bedienpanels des Schweißgerätes gemäß dem ersten Aspekt der Erfindung, wobei für jeden zu konfigurierbaren Schweißparameter die folgenden Schritte ausgeführt werden:
Schalten des Bedienpanels in einen Schweißparameter-Auswahlmodus durch Drücken oder Ziehen eines Bedienelementes des Bedienpanels,
Drehen des Bedienelementes in dem Schweißparameter-Auswahlmodus zur Auswahl des zu konfigurierenden Schweißparameters,
Umschalten von dem Schweißparameter-Auswahlmodus in einen Schweißparameter-Editiermodus des Schweißgerätes durch erneutes Drücken des Bedienelementes des Bedienpanels und
Drehen des Bedienelementes in dem Schweißparameter-Editiermodus zum Einstellen eines Schweißparameterwertes des ausgewählten zu konfigurierenden Schweißparameters,
wobei das Bedienpanel nach Starten eines durch das Schweißge rät ausgeführten Schweißvorganges in einen Schweißparameter-Anzeigemodus wechselt,
wobei die Schweißparameter in der partitionierten Funktionskurve der Schweißparameteranzeigeeinheit des Bedienpanels nach Starten des Schweißvorganges in dem Schweißparameter-Anzeigemodus in verschiedenen aufeinanderfolgenden Phasen des Schweißvorganges entsprechend dem in dem Schweißparameter-Editiermodus eingestellten Parameterwert sequenziell angezeigt und zur Vornahme des Schweißvorganges durch eine Schweißstromquelle des Schweißgerätes physikalisch eingestellt werden

Entsprechend der Erfindung wird in dem Schweißparameter-Editiermodus das Anzeigesegment des ausgewählten Schweißparameters innerhalb einer partitionierten Funktionskurve der Schweißparameteranzeigeeinheit durch die zugehörigen Leuchtmittel mit voller ungedimmter Leuchtkraft beleuchtet, während die Anzeigesegmente der übrigen nicht ausgewählten Schweißparameter innerhalb der partitionierten Funktionskurve der Schweißparameteranzeigeeinheit durch die zugehörigen Leuchtmittel nicht beleuchtet werden.

Entsprechend der Erfindung wird in dem Schweißparameter-Auswahlmodus das Anzeigesegment des ausgewählten Schweißparameters innerhalb der partitionierten Funktionskurve der Schweißparameteranzeigeeinheit durch die zugehörigen Leuchtmittel mit voller ungedimmter Leuchtkraft beleuchtet, während die Anzeigesegmente der übrigen nicht ausgewählten Schweißparameter innerhalb der partitionierten Funktionskurve der Schweißparameteranzeigeeinheit durch die zugehörigen Leuchtmittel mit gedimmter Leuchtkraft beleuchtet werden.

Bei einer weiteren möglichen Ausführungsform des erfindungsgemäßen Verfahrens wird der in dem Schweißparameter-Editiermodus eingestellte Parameterwert des zu konfigurierenden Schweißparameters in einem Datenspeicher des Schweißgerätes gespeichert und während eines anschließenden durch eine Schweißstromquelle des Schweißgerätes ausgeführten Schweißvorganges aus dem Datenspeicher ausgelesen und physikalisch eingestellt wird.

Im Weiteren werden Ausführungsformen des erfindungsgemäßen Bedienpanels und des erfindungsgemäßen Schweißgerätes sowie des erfindungsgemäßen Verfahrens zum Konfigurieren von Schweißparametern eines Schweißgerätes unter Bezugnahme auf die beigefügten Figuren näher erläutert.

Es zeigen:
- Fig. 1: eine Ansicht auf ein exemplarisches Ausführungsbeispiel eines erfindungsgemäßen Bedienpanels für ein Schweißgerät;
- Figuren 2A bis 2H: Ansichten zur Erläuterung der Funktionsweise des erfindungsgemäßen Bedienpanels;
- Fig. 3: eine weitere Ansicht zur Erläuterung der Funktionsweise des erfindungsgemäßen Bedienpanels;
- Figuren 4A, 4B, 4C: weitere Ansichten auf ein erfindungsgemäßes Bedienpanel zur Erläuterung seiner Funktionsweise;
- Fig. 5: eine weitere Ansicht zur Erläuterung der Funktionsweise eines erfindungsgemäßen Bedienpanels;
- Fig. 6: ein Ablaufdiagramm zur Darstellung eines Ausführungsbeispiels eines erfindungsgemäßen Verfahrens zum Konfigurieren von Schweißparametern;
- Fig. 7: eine Explosionsdarstellung einer möglichen Ausführungsform des erfindungsgemäßen Bedienpanels;
- Fig. 8: eine weitere Explosionsansicht zur Darstellung eines Ausführungsbeispiels des erfindungsgemäßen Bedienpanels;
- Fig. 9: ein schematisches Blockschaltbild zur Darstellung einer möglichen Ausführungsform eines erfindungsgemäßen Schweißgerätes.

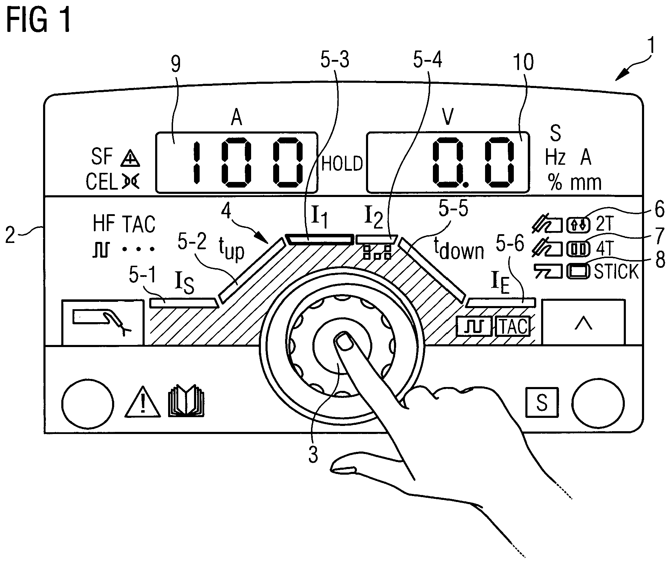

Wie man aus Fig. 1 erkennen kann, dient ein erfindungsgemäßes Bedienpanel 1 gemäß dem ersten Aspekt der Erfindung zum Einstellen und zur Anzeige von verschiedenen Schweißparametern eines Schweißgerätes. Das Bedienpanel 1 verfügt über eine Schweißparameteranzeigeeinheit 2 zur Anzeige von Schweißparametern mit verschiedenen Anzeigeelementen. Darüber hinaus weist das Bedienpanel 1 einen von einem Nutzer betätigbares Bedienelement 3 auf. Dieses manuell betätigbare Bedienelement 3 kann beispielsweise durch die Hand eines Nutzers betätigt bzw. bedient werden. Durch Drücken des Bedienelementes 3 kann zwischen einem Schweißparameter-Auswahlmodus und einem Schweißparameter-Editiermodus umgeschaltet werden. In dem Schweißparameter-Auswahlmodus ist durch Drehen des Bedienelementes 3 einer der Schweißparameter der Schweißparameteranzeigeeinheit 2 auswählbar. In dem Schweißparameter-Editiermodus ist durch Drehen des Bedienelementes 3 ein Parameterwert eines in dem Schweißparameter-Auswahlmodus ausgewählten Schweißparameters einstellbar. Bei dem in Fig. 1 dargestellten Ausführungsbeispiel weist das manuell betätigbare Bedienelement 3 ein inkremental einstellbares Bedienrad bzw. eine Drehdrückregelungseinheit auf. Vor Einleitung des Schweißvorganges kann ein Nutzer das Bedienpanel 1, wie es in Fig. 1 dargestellt ist, durch Drücken des Bedienelementes 3 in den Schweißparameter-Auswahlmodus versetzen. Sobald das Bedienpanel 1 in den Schweißparameter-Auswahlmodus versetzt worden ist, kann der Nutzer durch Drehen des Bedienelementes 3 einen der konfigurierbaren Schweißparameter des Schweißgerätes auswählen bzw. selektieren. Durch erneutes Drücken des Bedienelementes 3 kann der Nutzer das Bedienelement 3 von dem Schweißparameter-Auswahlmodus in einen Schweißparameter-Editiermodus versetzen. Sobald das Bedienpanel 1 sich in dem Schweißparameter-Editiermodus befindet, kann anschließend der Nutzer durch Drehen des Bedienelementes 3 einen Parameterwert des ausgewählten zu konfigurierenden Schweißparameters einstellen.

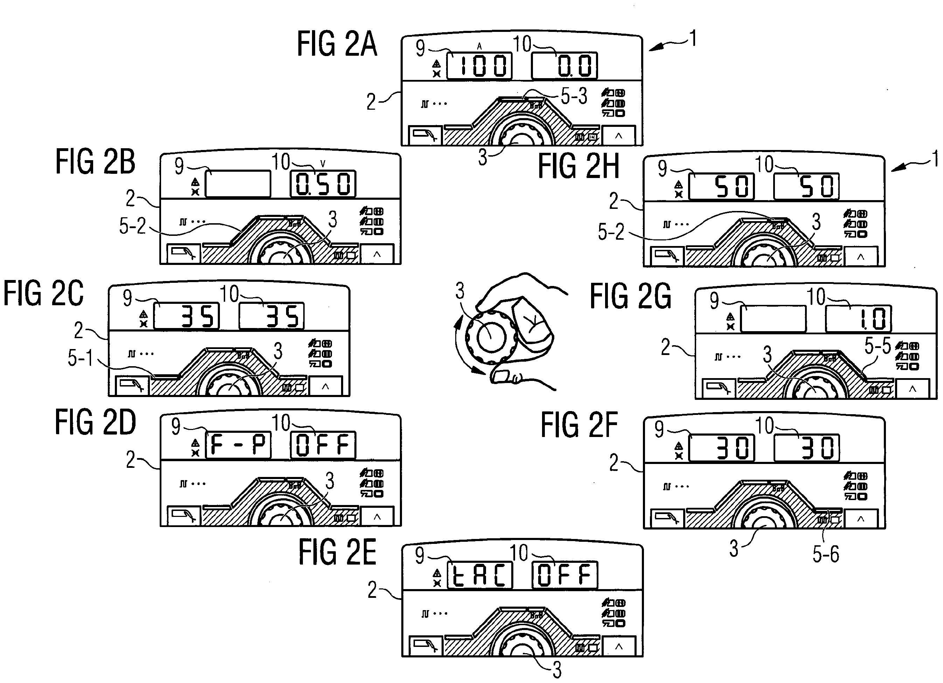

Ausgehend von dem Zustand in Fig. 1 kann der Nutzer durch Drücken des Bedienelementes 3 Funktionskurvenparameter aufrufen, wie in den Figuren 2A bis 2H dargestellt. Die Schweißparameteranzeigeeinheit 2 weist bei dem dargestellten Ausführungsbeispiel eine partitionierte Funktionskurve 4 auf. Verschiedene Schweißparameter des Schweißgerätes können jeweils durch ein zugehöriges Anzeigesegment 5 der partitionierten Funktionskurve 4 angezeigt werden. Bei einer möglichen Ausführungsform weist jedes Anzeigesegment 5 der partitionierten Funktionskurve 4 der Schweißparameteranzeigeeinheit 2 einen transparenten Kunststoffblock auf, der von einer oder mehreren dimmbaren Leuchtmitteln beleuchtbar ist. Bei diesen dimmbaren Leuchtmittel kann es sich beispielsweise um lichtemittierende Dioden handeln. Die Anzahl der Anzeigesegmente 5 innerhalb der partitionierten Funktionskurve 4 kann bei unterschiedlichen Ausführungsvarianten unterschiedlich sein. Die

Funktionskurve 4 bietet dem Nutzer eine Übersicht über wesentliche Schweißparameter für den Schweißbetrieb. Dabei kann die Reihenfolge der Schweißparameter durch eine sogenannte Wäscheleinestruktur vorgegeben sein, wie in Fig. 1 erkennbar. Die in der Funktionskurve 4 wiedergegebenen Schweißparameter können bei einer möglichen Ausführungsform einen Startstrom Iₛ, einen Up-Slope-Zeitraum tᵤₚ, mindestens einen Hauptstrom, einen Down-Slope-Zeitraum t_{down} sowie einen Endstrom I_{E} aufweisen. Der Startstrom Iₛ kann für verschiedene Betriebsarten des Schweißgerätes getrennt gespeichert werden. Der Down-Slope-Zeitraum t_{down} gibt den Zeitraum an, in welchem bei dem Schweißvorgang die Absenkung von dem Hauptstrom zu dem Endstrom I_{E} erfolgt. Der Down-Slope-Zeitraum t_{down} kann für verschiedene Betriebsarten, insbesondere 2-Takt-Betrieb oder 4-Takt-Betrieb getrennt gespeichert werden. Bei einer möglichen Ausführungsform weist das Bedienpanel 1 des Schweißgerätes zusätzlich Tasten zur Auswahl einer Betriebsart des Schweißgerätes auf, insbesondere eines 2-Takt-Betriebes, eines 4-Takt-Betriebes oder eines Stabelektroden-Schweißbetriebes des Schweißgerätes. Die in der Funktionskurve 4 enthaltenen Schweißparameter werden jeweils durch ein zugehöriges Anzeigesegment 5-1, 5-2, 5-3, 5-4, 5-5, 5-6 angezeigt. Bei dem in Fig. 1 dargestellten Implementierungsbeispiel umfasst demnach die Funktionskurve 4 sechs Anzeigesegmente 5-1 bis 5-6. Das erste Anzeigesegment 5-1 ist für den Startstrom Iₛ des Schweißgerätes vorgesehen. Das Anzeigesegment 5-2 spiegelt den Up-Slope-Zeitraum tᵤₚ wider. Das dritte Anzeigesegment 5-3 und das vierte Anzeigesegment 5-4 sind für zwei Hauptströme I1, 12 vorgesehen. Das fünfte Anzeigesegment 5-5 zeigt den Down-Slope-Zeitraum t_{down}. Das sechste Anzeigesegment 5-6 der Funktionskurve 4 ist für den Endstrom I_{E} vorgesehen.

Weiterhin verfügt die Schweißparameteranzeigeeinheit 2 bei dem dargestellten Ausführungsbeispiel über Tasten 6, 7, 8 zur Auswahl eines 2-Takt-Betriebes, eines 4-Takt-Betriebes und eines Stabelektrodenschweißbetriebes (Stick). Die Tasten 6, 7, 8 sind optional vorgesehen. Jedes Anzeigesegment 5-i der partitionierten Funktionskurve 4 der Schweißparameteranzeige 2 weist bei einer möglichen Ausführungsform einen transparenten Kunststoffblock auf, der von einer darunterliegenden lichtemittierenden Diode beleuchtet wird. In einer bevorzugten Ausführungsform ist die zu dem Nutzer hin gerichtete Fläche jedes transparenten Kunststoffblockes der partitionierten Funktionskurve 4 zur Erhöhung der Lichtstreuung oberflächenbehandelt.

Entsprechend der Erfindung wird in dem Schweißparameter-Editiermodus das Anzeigesegment 5-i des ausgewählten Schweißparameters innerhalb der partitionierten Funktionskurve 4 der Schweißparameteranzeigeeinheit 2 durch die zugehörigen Leuchtmittel bzw. die zugehörige lichtemittierende Diode mit voller ungedimmter Leuchtkraft beleuchtet, während die Anzeigesegmente 5-i der übrigen nicht ausgewählten Schweißparameter innerhalb der partitionierten Funktionskurve 4 der Schweißparameteranzeigeeinheit 2 durch die zugehörigen Leuchtmittel bzw. die zugehörige darunterliegende lichtemittierende Diode nicht beleuchtet sind.

In dem Schweißparameter-Auswahlmodus entsprechend der Erfindung wird das Anzeigesegment 5 des ausgewählten Schweißparameters innerhalb der partitionierten Funktionskurve 4 der Schweißparameteranzeigeeinheit 2 durch die zugehörigen Leuchtmittel bzw. die zugehörige lichtemittierende Diode mit voller ungedimmter Leuchtkraft beleuchtet, während die Anzeigesegmente 5 der übrigen nicht ausgewählten Schweißparameter innerhalb der partitionierten Funktionskurve 4 der Schweißparameteranzeigeeinheit 2 durch die zugehörige bzw. die dahinterliegende lichtemittierende Diode LED mit gedimmter Leuchtkraft beleuchtet werden.

Durch Drehen des Bedienelementes 3 kann der Nutzer zwischen verschiedenen Anzeigesegmenten 5-i der partitionierten Funktionskurve 4 hin und her drehen, wie in Fig. 2 schematisch dargestellt. Beispielsweise wird in Fig. 2A das Anzeigesegment 5-3 gewählt, welches den ersten Hauptstrom I1 wiedergibt, wobei der momentan eingestellte Schweißparameterwert durch eine erste Digitalanzeige 9 angezeigt wird. Die erste Anzeigeeinheit 9 zeigt den ersten Hauptstrom I1 mit einem eingestellten Parameterwert von 100 Ampere in dem dargestellten Beispiel an.

Durch Drehen des Bedienelementes 3 nach links kann der Nutzer in dem dargestellten Beispiel gemäß Fig. 2B das zweite Anzeigesegment 5-2 für den Up-Slope-Zeitraum tᵤₚ auswählen. Eine zweite Digitalanzeige 10 zeigt den momentan eingestellten Wert für den Up-Slope-Zeitraum tᵤₚ an, nämlich 0,5 Sekunden in dem dargestellten Beispiel.

Durch weiteres Drehen des Bedienelementes 3 gelangt man zum ersten Anzeigesegment der partitionierten Funktionskurve 4, nämlich dem Startstrom Is, wie in Fig. 2C dargestellt. Der Startstrom Iₛ weist bei dem dargestellten Beispiel eine Stromamplitude als Parameter von 35 Ampere auf, wie bei der ersten Anzeigeeinheit 9 dargestellt. Dies entspricht 35 % des Hauptstromes von 100 Ampere, wie in der zweiten Anzeigeeinheit 10 angezeigt.

Durch Drehen bzw. Betätigen des Bedienelementes 3 kann der Nutzer den TAC auswählen mit der Pulsfrequenz F-P, die im Setup deaktiviert werden können, wie in Fig. 2D dargestellt. Eine Anzeige HF Zünden leuchtet, wenn ein Setup-Parameter HFT für einen Intervall für Hochfrequenzimpulse eingestellt wird. Durch weiteres Drehen des Bedienelementes 3 kann der Nutzer beispielsweise das sechste Anzeigesegment 5-6 für den Endstrom I_{E} selektieren, wie in Fig. 2F dargestellt. Bei dem dargestellten Beispiel hat der eingestellte Stromwert einen Endstrom I_{E} von 30 Ampere, wie durch die erste Digitalanzeige 9 angezeigt, wobei dies 30 % des Hauptstromes entspricht, wie durch die zweite Digitalanzeige 10 angezeigt.

Durch weiteres Drehen des Bedienelementes 3 kann der Nutzer das fünfte Anzeigesegment 5-5 auswählen, wie in Fig. 2G dargestellt. Das fünfte Anzeigesegment 5-5 der Funktionskurve 4 stellt den Down-Slope-Zeitraum t_{down} dar. Bei dem dargestellten Beispiel ist der eingestellte Down-Slope-Zeitraum t_{down} 1 Sekunde, wie durch die zweite Digitalanzeige 10 angezeigt.

Durch Drehen des Bedienelementes 3 kann auch das vierte Anzeigeelement 5-4 für den zweiten Hauptstrom I2 ausgewählt werden. Der zweite Hauptstrom I2 weist in dem dargestellten Beispiel einen Stromwert von 50 Ampere auf, wie durch die erste Digitalanzeigeeinheit 9, wobei dies 50 % des ersten Hauptstromes I1 entspricht, wie durch die zweite Digitalanzeige 10 angezeigt.

Ein Nutzer hat die Möglichkeit, durch Drücken bzw. Betätigen eines Bedienelementes 3 das Bedienpanel 1 in den Schweißparameter-Auswahlmodus zu versetzen, um dann einen von ihm gewünschten konfigurierbaren Schweißparameter durch Drehen des Bedienelementes 3 auszuwählen, wie in den Figuren 2A bis 2E dargestellt. Durch erneutes Drücken des Bedienelementes 3 kann von dem Schweißparameter-Auswahlmodus in den Schweißparameter-Editiermodus umgeschaltet werden. Sobald der Schweißparameter-Editiermodus umgeschaltet werden wird, hat der Nutzer die Möglichkeit, einen Parameterwert des betreffenden Schweißparameters zu editieren bzw. einzustellen, insbesondere einen Sollwert einzustellen.

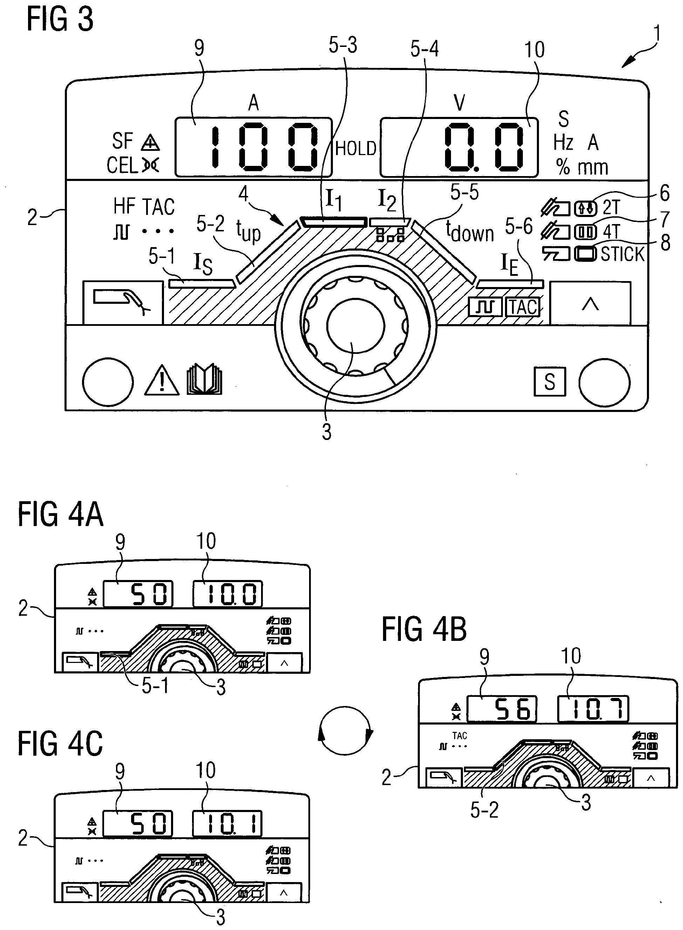

Beispielsweise kann vor der eigentlichen Durchführung des Schweißvorganges durch den Nutzer im Editiermodus ein Sollwert von 100 Ampere für den ersten Hauptstrom I1 eingestellt werden, wie in Fig. 3 dargestellt. Wie man in Fig. 3 erkennen kann, wird entsprechend der Erfindung im Schweißparameter-Editiermodus das Anzeigesegment 5-3 des betreffenden ausgewählten Schweißparameters, d.h. des ersten Hauptstroms I1, innerhalb der partitionierten Funktionskurve 4 der Schweißparameteranzeigeeinheit 2 durch die zugehörigen dahinterliegenden Leuchtmittel mit voller ungedimmter Leuchtkraft beleuchtet, während die Anzeigesegmente 5-1, 5-2, 5-4, 5-5, 5-6 der übrigen nicht ausgewählten Schweißparameter innerhalb der partitionierten Funktionskurve 4 der Schweißparameteranzeigeeinheit 2 durch die zugehörigen Leuchtmittel nicht beleuchtet sind bzw. dunkel sind.

Demgegenüber und entsprechend der Erfindung sind im Schweißparameter-Auswahlmodus die Anzeigesegmente 5 der übrigen nicht ausgewählten Schweißparameter innerhalb der partitionierten Funktionskurve 4 der Schweißparameteranzeigeeinheit 2 durch die zugehörigen Leuchtmittel mit gedimmter bzw. verminderter Leuchtkraft beleuchtet, beispielsweise nur mit einer 30% Leuchtkraft.

Der Nutzer hat somit bei dieser bevorzugten Ausführungsform stets die Möglichkeit optisch zu erkennen, ob das Bedienpanel 1 sich im Schweißparameter-Editiermodus (Figuren 1, 3) oder in einem Schweißparameter-Auswahlmodus (Figuren 2A bis 2H) befindet.

Durch mehrmaliges Pressen bzw. Betätigen des Bedienelementes 3 hat der Nutzer die Möglichkeit, das Bedienpanel 1 zwischen dem Schweißparameter-Auswahlmodus und dem Schweißparameter-Editiermodus ohne Weiteres hin und her zu schalten.

Sobald ein durch das Schweißgerät ausgeführter Schweißvorgang startet bzw. eingeleitet wird, wechselt das Bedienpanel 1 in einer bevorzugten Ausführungsform automatisch in einen Schweißparameter-Anzeigemodus. Figuren 4A, 4B, 4C zeigen die Schweißparameteranzeigeeinheit 2 des Bedienpanels 1 während der Durchführung eines Schweißvorganges bzw. Schweißprozesses. Bei dem dargestellten Ausführungsbeispiel wird der momentan aktive Schweißparameter vorzugsweise gedimmt dargestellt. Die Schweißparameter in der partitionierten Funktionskurve 4 der Schweißparameteranzeigeeinheit 2 des Bedienpanels 1 werden nach Starten des Schweißvorganges in dem Schweißparameter-Anzeigemodus in verschiedenen aufeinanderfolgenden Phasen des Schweißvorganges entsprechend dem in dem Schweißparameter-Editiermodus eingestellten Parameterwert sequenziell angezeigt und zur Vornahme des Schweißvorganges durch eine Schweißstromquelle 11 des Schweißgerätes physikalisch eingestellt. In dem Schweißparameter-Anzeigemodus wird das Anzeigesegment 5 des aktuell aktiven von der Schweißstromquelle 11 des Schweißgerätes physikalisch eingestellten Schweißparameters innerhalb der partitionierten Funktionskurve 4 der Schweißparameteranzeigeeinheit 2 durch die zugehörigen Leuchtmittel mit gedimmter Leuchtkraft beleuchtet. In Fig. 4A ist der aktuell aktive physikalisch eingestellte Schweißparameter der Startstrom Is, wobei das Anzeigesegment 5-1 des aktuell aktiven physikalisch eingestellten Schweißparameters durch das zugehörige Leuchtmittel mit einer gedimmten Leuchtkraft beleuchtet wird. Die beiden Digitalanzeigen 9, 10 zeigen den momentanen Stromwert in Ampere und die momentane Spannung in Volt an.

Fig. 4B zeigt den sequenziellen Wechsel zu dem nächsten physikalisch ausgeführten Schweißparameter, nämlich den Up-Slope-Zeitraum tᵤₚ, welcher durch das Anzeigesegment 5-2 angezeigt wird. In dem Up-Slope-Zeitraum tᵤₚ beträgt zu dem dargestellten exemplarischen Zeitpunkt der Stromwert 56 Ampere und die momentane Spannung 10,7 Volt. Nach Erreichen des Hauptstroms wird die entsprechende Anzeige ebenfalls gedimmt angezeigt. Bei dem dargestellten Beispiel beträgt der Stromwert 50 Ampere und die Spannung 10,1 Volt, wie in Fig. 4C erkennbar.

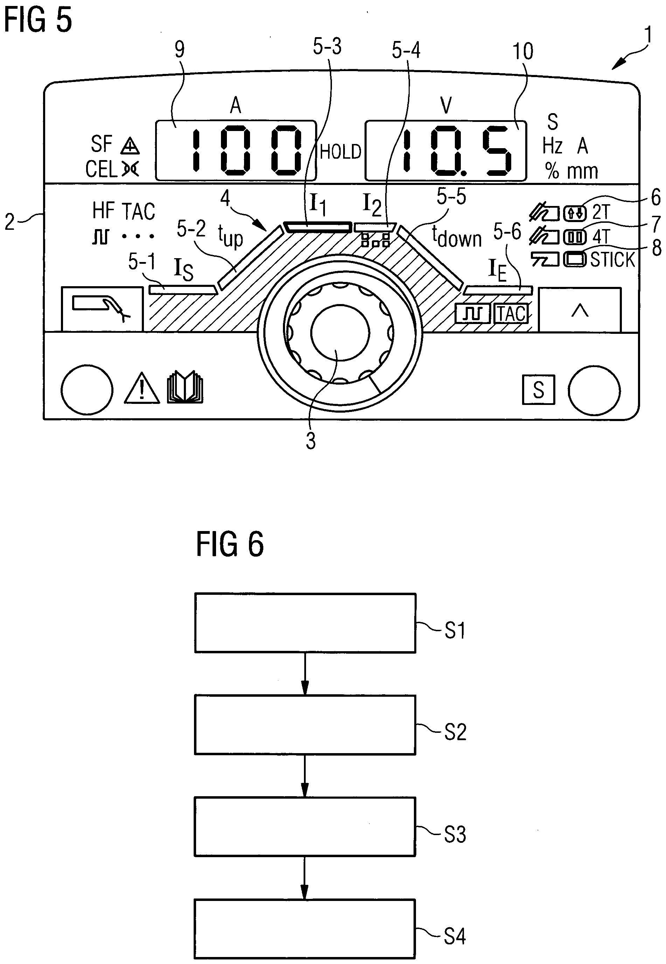

Nach Vollendung des Schweißvorganges können Hold-Werte, d.h. Mittelwerte, des Stromwertes bzw. des Spannungswertes angezeigt werden und eine Anzeige "Hold" leuchtet. Bei dem dargestellten Beispiel beträgt der Hold-Stromwert 100 Ampere und die Hold-Spannung 10,5 Volt, wie in Fig. 5 dargestellt.

Das erfindungsgemäße Bedienpanel 1 kann weitere Bedienelemente 3 aufweisen. Beispielsweise kann das Bedienpanel 1 bei einer möglichen Ausführungsform zusätzlich als Schweißparameter eine Balance zum Einstellen einer Aufschmelzleistung und/oder eines Elektrodendurchmessers einer Schweißelektrode anzeigen.

Fig. 6 zeigt ein Ablaufdiagramm zur Darstellung eines Ausführungsbeispiels eines erfindungsgemäßen Verfahrens zum Konfigurieren von Schweißparametern eines Schweißgerätes mittels eines manuell betätigbaren Bedienpanels 1 eines Schweißgerätes.

Bei dem in Fig. 6 schematisch dargestellten Verfahren können die zu konfigurierenden Schweißparameter des Schweißgerätes durch die folgenden Hauptschritte konfiguriert werden.

In einem ersten Schritt S1 wird das Bedienpanel 1 in einen Schweißparameter-Auswahlmodus geschaltet bzw. versetzt. Dies geschieht vorzugsweise durch Drücken eines Bedienelementes 3 des Bedienpanels 1, beispielsweise eines manuell betätigbaren Bedienelementes 3 in Form eines Drehreglers.

Sobald das Bedienpanel 1 in den Schweißparameter-Auswahlmodus versetzt worden ist, kann das Bedienelemente 3 des Bedienpanels 1 anschließend im Schritt S2 zur Auswahl eines zu konfigurierenden Schweißparameters im Uhrzeigersinn oder entgegen dem Uhrzeigersinn gedreht werden.

Anschließend kann der Nutzer das Bedienpanel 1 von dem Schweißparameter-Auswahlmodus in den Schweißparameter-Editiermodus durch erneutes Drücken des Bedienelementes 3 im Schritt S3 umschalten.

Sobald das Bedienpanel in den Schweißparameter-Editiermodus durch Drücken des Bedienelementes 3 versetzt worden ist, kann der Nutzer durch Drehen des Bedienelementes 3 im oder entgegen dem Uhrzeigersinn Parameterwerte des ausgewählten zu konfigurierenden Schweißparameters, beispielsweise zur Einstellung eines Sollwertes, einstellen.

Nachdem alle gewünschten Schweißparameter mit entsprechenden Schweißparameterwerten eingestellt worden sind, kann der Schweißvorgang eingeleitet bzw. gestartet werden. Dann wird das Bodenpanel 1 des Schweißgerätes in einen Schweißparameter-Anzeigemodus geschaltet.

Der in dem Schweißparameter-Editiermodus eingestellte Parameterwert des zu konfigurierenden Schweißparameters wird bei einer möglichen Ausführungsform in einem internen Datenspeicher des Schweißgerätes gespeichert und während des anschließenden durch die Schweißstromquelle 11 des Schweißgerätes ausgeführten Schweißvorganges aus dem Datenspeicher ausgelesen. Bei einer möglichen Ausführungsvariante kann der Datenspeicher auch in dem Bedienpanel 1 integriert sein.

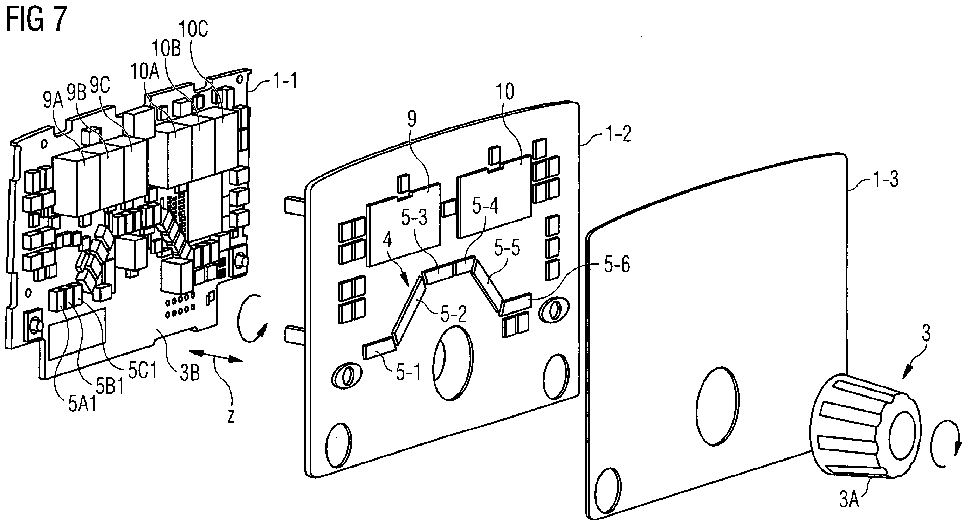

Fig. 7 zeigt eine Explosionsdarstellung einer möglichen Ausführungsvariante des erfindungsgemäßen Bedienpanels 1. Das Bedienpanel 1 umfasst eine mit elektronischen Bauelementen bestückte Schaltplatine 1-1, ein sogenanntes Distanzgitter 1-2 und ein Frontelement 1-3, die zusammengesetzt werden können. Auf das Frontelement 1-3 können verschiedene Beschriftungen aufgedruckt sein, wobei das Frontelement 1-3 im Übrigen transparent ist. Die partitionierte Funktionskurve 4 verfügt über verschiedene Anzeigesegmente 5-1, wobei jedes Anzeigesegment 5-i der partitionierten Funktionskurve 4 des Distanzgitters 1-2 einen transparenten Kunststoffblock aufweist, der von einer oder mehreren dimmbaren Leuchtmitteln beleuchtbar ist. Diese dimmbaren Leuchtmittel bzw. lichtemittierenden Dioden befinden sich auf der bestückten Schaltplatine 1-1, wie in Fig. 7 dargestellt. Jedes Anzeigesegment bzw. jeder zugehörige transparente Kunststoffblock 5-i verfügt in dem dargestellten Ausführungsbeispiel über drei dahinterliegende Leuchtdioden, wie in Fig. 7 erkennbar. Die zu dem Nutzer hin gerichtete Fläche jedes transparenten Kunststoffblockes 5-i der partitionierten Funktionskurve 4 ist vorzugsweise zur Erhöhung der Lichtstreuung oberflächenbehandelt.

Hinter den Fenstern für die Digitalanzeigen 9, 10 befinden sich vorzugsweise steuerbare Segmentanzeigen 9A, 9B, 9C bzw. 10A, 10B, 10C zur Darstellung einer digitalen Ziffer.

Das Bedienelement 3 weist einen Bedienknopf 3A auf, der auf einen betätigbaren Drehregler 3B, welcher durch eine Öffnung des Frontelementes 1-3 und durch eine Öffnung des Distanzgitters 1-2 aufsetzbar ist. Der Drehregler 3B kann rotiert bzw. gedreht werden und ist zusätzlich in Z-Richtung in zwei Positionen hin und her schaltbar, wie in Fig. 7 angedeutet. Vorzugsweise handelt es sich bei dem manuell betätigbaren Bedienelement 3 mit dem Drehregler 3B um einen inkremental einstellbares Bedienrad.

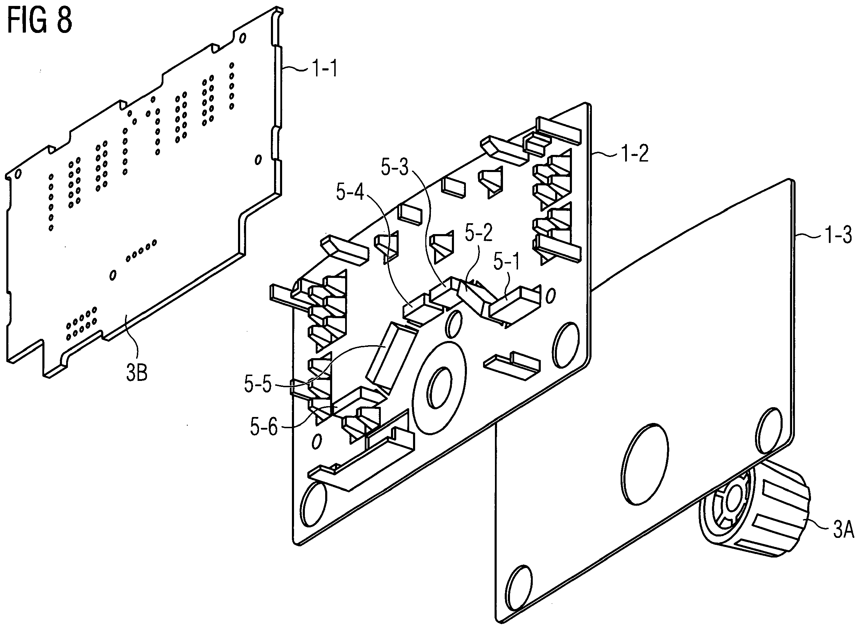

Fig. 8 zeigt ein weitere Explosionsansicht des Bedienpanels 1 von hinten. In der in Fig. 8 dargestellten Explosionsansicht ist die Rückseite des Distanzgitters 1-2 erkennbar, insbesondere die verschiedenen Kunststoffblöcke der Anzeigesegmente 5-i innerhalb der partitionierten Funktionskurve 4.

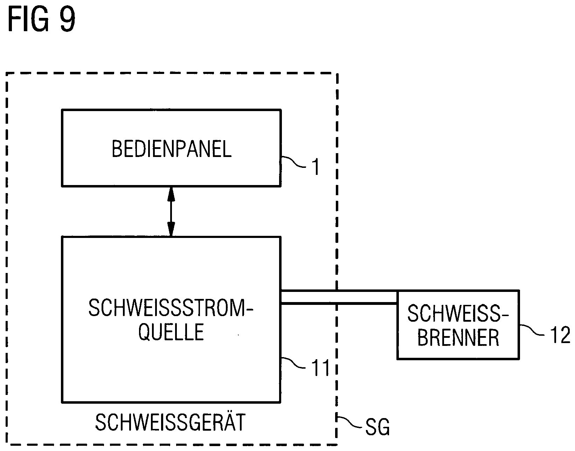

Fig. 9 zeigt schematisch ein erfindungsgemäßes Schweißgerät SG mit einem erfindungsgemäßen Bedienpanel 1 und einer daran angeschlossenen Schweißstromquelle 11 zur Durchführung eines Schweißvorgang mithilfe eines daran angeschlossenen Schweißbrenners 12. Die Schweißstromquelle 11 stellt die Schweißparameter während des Schweißvorganges entsprechend der in dem Schweißparameter-Editiermodus eingestellten Parameterwerte der in dem Schweißparameter-Auswahlmodus ausgewählten Schweißparameter physikalisch während des Schweißvorganges ein. Dabei werden die momentanen tatsächlich eingestellten Schweißparameterwerte durch das Bedienpanel 1 während des Schweißvorganges in dem Schweißparameter-Anzeigemodus dem Nutzer angezeigt.

Durch das Distanzgitter 1-2 kann erreicht werden, dass die Funktionskurve 4 als homogen ausgeleuchtete Linie angezeigt wird.

Das in den Figuren 1 bis 9 dargestellte Bedienpanel 1 zeigt ein mögliches Ausführungsbeispiel, wobei Variationen des Bedienpanels 1 möglich sind. Beispielsweise kann das Bedienpanel 1 mehrere Bedienelemente 3 enthalten. Weiterhin kann beispielsweise anstatt einer Digitalanzeige 9, 10 bei einer möglichen Ausführungsvariante auch eine Analoganzeige vorgesehen sein. Weiterhin kann die Form und Partitionierung der Funktionskurve 4 für verschiedene Schweißgeräte variieren. Bei einer weiteren möglichen Ausführungsform können auch mehrere partitionierte Funktionskurven W auf der SchweißparameterAnzeigeeinheit 2 vorgesehen sein. Auch weitere Betriebsmodi sind möglich, beispielsweise mehrere Editiermodi, insbesondere zur Grob- oder Feinjustierung von Schweißparameterwerten.

Bei einer weiteren möglichen Ausführungsform des erfindungsgemäßen Bedienpanels weist dieses neben dem Schweißparameter-Editiermodus, dem Schweißparameter-Auswahlmodus und dem Schweißparameter-Anzeigemodus einen weiteren Schweißparameter-Setupmodus auf, der es erlaubt, neben den Hauptschweißparametern zusätzlich Hintergrund-Schweißparameter einzustellen. Diese Hintergrund-Schweißparameter umfassen Schweißparameter, die relativ selten geändert bzw. eingestellt werden. Bei einer möglichen Ausführungsform umfassen die Hintergrund-Schweißparameter im Wesentlichen eine Gasvorströmzeit, eine Gasnachströmzeit, eine Pulsfrequenz, einen Duty Cycle, einen Grundstrom vor Pulsen, eine Startstromzeit, eine Endstromzeit und/oder Gasspülparameter. Weiterhin können im Setupmodus auch entsprechende Werkseinstellungen wiederhergestellt werden (FAC Factory Reset). Bei einer möglichen Ausführungsvariante kann auch im Setup-Betriebsmodus für die Hintergrund-Schweißparameter zwischen einem Auswahlmodus und einem Editiermodus hin und her geschaltet werden, insbesondere durch Drücken oder Ziehen des Bedienelementes 3. In den Setupmodus gelangt man beispielsweise bei einer möglichen Ausführungsform durch gleichzeitiges Drücken zweier Tasten der Schweißparameter-Anzeigeeinheit 2.

## Patentansprüche

1. Bedienpanel (1) für ein Schweißgerät (SG) mit
- einer Schweißparameteranzeigeeinheit (2) zur Anzeige von Schweißparametern und mit
- mindestens einem durch einen Nutzer manuell betätigbaren Bedienelement (3),
**wobei** das Bedienpanel (1) durch Betätigen des Bedienelementes (3) zwischen einem Schweißparameter-Auswahlmodus und einem Schweißparameter-Editiermodus umschaltbar ist; in dem Schweißparameter-Auswahlmodus durch Drehen des Bedienelementes (3) einer der Schweißparameter der Schweißparameteranzeigeeinheit (2) auswählbar ist;
in dem Schweißparameter-Editiermodus durch Drehen des Bedienelementes (3) ein Parameterwert eines ausgewählten Schweißparameters der Schweißparameteranzeigeeinheit (2) einstellbar ist;
**dadurch gekennzeichnet, dass**
das Bedienpanel (1) so eingestellt ist, dass **es** nach Starten eines durch das Schweißgerät (SG) ausgeführten Schweißvorganges in einen Schweißparameter-Anzeigemodus wechselt;
die Schweißparameter in einer partitionierten Funktionskurve (4) der Schweißparameteranzeigeeinheit (2) des Bedienpanels (1) nach Starten des Schweißvorganges in dem Schweißparameter-Anzeigemodus in verschiedenen aufeinanderfolgenden Phasen des Schweißvorganges entsprechend dem in dem Schweißparameter-Editiermodus eingestellten Parameterwert sequenziell angezeigt und zur Vornahme des Schweißvorganges durch eine Schweißstromquelle (11) des Schweißgerätes (SG) physikalisch eingestellt werden;
ein Schweißparameter jeweils durch ein zugehöriges Anzeigesegment (5) einer partitionierten Funktionskurve (4) der Schweißparameteranzeigeeinheit (2) angezeigt wird;
in dem Schweißparameter-Editiermodus das Anzeigesegment (5) des ausgewählten Schweißparameters innerhalb der partitionierten Funktionskurve (4) der Schweißparameteranzeigeeinheit (2) durch die zugehörigen Leuchtmittel mit voller ungedimmter Leuchtkraft beleuchtet ist, während die Anzeigesegmente (5) der übrigen nicht ausgewählten Schweißparameter innerhalb der partitionierten Funktionskurve (4) der Schweißparameteranzeigeeinheit (2) durch die zugehörigen Leuchtmittel nicht beleuchtet sind; und in dem Schweißparameter-Auswahlmodus das Anzeigesegment (5) des ausgewählten Schweißparameters innerhalb der partitionierten Funktionskurve (4) der Schweißparameteranzeigeeinheit (2) durch die zugehörigen Leuchtmittel mit voller ungedimmter Leuchtkraft beleuchtet ist, während die Anzeigesegmente (5) der übrigen nicht ausgewählten Schweißparameter innerhalb der partitionierten Funktionskurve (4) der Schweißparameteranzeigeeinheit (2) durch die zugehörigen Leuchtmittel mit gedimmter Leuchtkraft beleuchtet sind.

2. Bedienpanel nach Anspruch 1,
wobei das manuell betätigbare Bedienelement (3) ein inkremental einstellbares Bedienrad aufweist.

3. Bedienpanel nach Anspruch 1 oder 2,
wobei das Anzeigesegment (5) der partitionierten Funktionskurve (4) der Schweißparameteranzeigeeinheit (2) einen transparenten Kunststoffblock aufweist, der von einer oder mehreren dimmbaren Leuchtmitteln, insbesondere lichtemittierenden Dioden, LEDs, beleuchtbar ist.

4. Bedienpanel nach Anspruch 3,
wobei die zu dem Nutzer hin gerichtete Fläche jedes transparenten Kunststoffblockes eines Anzeigesegmentes (5) der partitionierten Funktionskurve (4) zur Erhöhung der Lichtstreuung oberflächenbehandelt ist.

5. Bedienpanel nach einem der vorangehenden Ansprüche 1 bis 4,
wobei in dem Schweißparameter-Anzeigemodus das Anzeigesegment (5) des aktuell aktiven von der Schweißstromquelle (11) des Schweißgerätes (SG) physikalisch eingestellten Schweißparameters innerhalb der partitionierten Funktionskurve (4) der Schweißparameteranzeigeeinheit (2) durch die zugehörigen Leuchtmittel mit gedimmter Leuchtkraft beleuchtet ist.

6. Bedienpanel nach einem der vorangehenden Ansprüche 1 bis 5,
wobei das Bedienpanel (1) mindestens eine Digitalanzeige (9, 10) zur Anzeige eines Parameterwertes eines in dem Schweißparameter-Auswahlmodus ausgewählten Schweißparameters oder eines während des Schweißvorganges von der Schweißstromquelle (11) des Schweißgerätes (SG) aktiv eingestellten Schweißparameters aufweist.

7. Schweißgerät (SG) **gekennzeichnet durch** ein Bedienpanel (1) nach einem der vorangehenden Ansprüche 1 bis 6 und eine Schweißstromquelle (11) zur Einstellung von Schweißparametern während des Schweißvorganges entsprechend der in dem Schweißparameter-Editiermodus eingestellten Parameterwerte der in dem Schweißparameter-Auswahlmodus ausgewählten Schweißparameter.

8. Verfahren zum Konfigurieren von Schweißparametern eines Schweißgerätes (SG) mittels eines manuell betätigbaren Bedienpanels (1) des Schweißgerätes (SG) nach Anspruch 7, **dadurch gekennzeichnet, dass** für jeden zu konfigurierenden Schweißparameter die folgenden Schritte ausgeführt werden:
(a) Schalten (S1) des Bedienpanels (1) in einen Schweißparameter-Auswahlmodus durch Ziehen oder Drücken eines Bedienelementes (3) des Bedienpanels (1),
(b) Drehen (S2) des Bedienelementes (3) in dem Schweißparameter-Auswahlmodus zur Auswahl des zu konfigurierenden Schweißparameters,
(c) Umschalten (S3) von dem Schweißparameter-Auswahlmodus in einen Schweißparameter-Editiermodus des Schweißgerätes (SG) durch erneutes Drücken des Bedienelementes (3) des Bedienpanels (1) und
(d) Drehen (S4) des Bedienelementes (3) in dem Schweißparameter-Editiermodus zum Einstellen eines Parameterwertes des ausgewählten zu konfigurierenden Schweißparameters,
wobei das Bedienpanel (1) nach Starten eines durch das Schweißgerät (SG) ausgeführten Schweißvorganges in einen Schweißparameter-Anzeigemodus wechselt, wobei die Schweißparameter in einer partitionierten Funktionskurve (4) der Schweißparameteranzeigeeinheit (2) des Bedienpanels (1) nach Starten des Schweißvorganges in dem Schweißparameter-Anzeigemodus in verschiedenen aufeinanderfolgenden Phasen des Schweißvorganges entsprechend dem in dem Schweißparameter-Editiermodus eingestellten Parameterwert sequenziell angezeigt und zur Vornahme des Schweißvorganges durch eine Schweißstromquelle (11) des Schweißgerätes (SG) physikalisch eingestellt werden; wobei in dem Schweißparameter-Editiermodus ein Anzeigesegment (5) des ausgewählten Schweißparameters innerhalb der partitionierten Funktionskurve (4) der Schweißparameteranzeigeeinheit (2) durch die zugehörigen Leuchtmittel mit voller ungedimmter Leuchtkraft beleuchtet ist, während die Anzeigesegmente (5) der übrigen nicht ausgewählten Schweißparameter innerhalb der partitionierten Funktionskurve (4) der Schweißparameteranzeigeeinheit (2) durch die zugehörigen Leuchtmittel nicht beleuchtet werden; und
wobei in dem Schweißparameter-Auswahlmodus das Anzeigesegment (5) des ausgewählten Schweißparameters innerhalb der partitionierten Funktionskurve (4) der Schweißparameteranzeigeeinheit (2) durch die zugehörigen Leuchtmittel mit voller ungedimmter Leuchtkraft beleuchtet ist, während die Anzeigesegmente (5) der übrigen nicht ausgewählten Schweißparameter innerhalb der partitionierten Funktionskurve (4) der Schweißparameteranzeigeeinheit (2) durch die zugehörigen Leuchtmittel mit gedimmter Leuchtkraft beleuchtet werden.

9. Verfahren nach Anspruch 8,
wobei der in dem Schweißparameter-Editiermodus eingestellte Parameterwert des zu konfigurierenden Schweißparameters in einem Datenspeicher des Schweißgerätes (SG) gespeichert und während eines anschließenden durch eine Schweißstromquelle (11) des Schweißgerätes (SG) ausgeführten Schweißvorganges aus dem Datenspeicher ausgelesen und physikalisch eingestellt wird.

## Claims

1. Control panel (1) for a welding tool (SG) comprising
- a welding parameter display unit (2) for displaying welding parameters and comprising
- at least one control element (3) manually actuable by a user,
wherein the control panel (1) can be switched between a welding parameter selection mode and a welding parameter editing mode by actuating the control element (3);
in the welding parameter selection mode, one of the welding parameters of the welding parameter display unit (2) can be selected by turning the control element (3);
in the welding parameter editing mode, a parameter value of a selected welding parameter of the welding parameter display unit (2) can be set by turning the control element (3);
**characterised in that**
the control panel (1) is set up in such a way that, after a welding process performed by the welding tool (SG) is started, it switches into a welding parameter display mode;
in the welding parameter display mode, after the welding process is started, the welding parameters are displayed sequentially in a partitioned function curve (4) of the welding parameter display unit (2) of the control panel (1) in different successive phases of the welding process in accordance with the parameter value set in the welding parameter editing mode, and are physically set by a welding power source (11) of the welding tool (SG) to perform the welding process;
each welding parameter is displayed by an associated display segment (5) of a partitioned function curve (4) of the welding parameter display unit (2);
in the welding parameter editing mode, the display segment (5) of the selected welding parameter within the partitioned function curve (4) of the welding parameter display unit (2) is lit at full, undimmed luminosity by the associated lighting means, whilst the display segments (5) of the other, unselected welding parameters within the partitioned function curve (4) of the welding parameter display unit (2) are not lit by the associated lighting means; and
in the welding parameter selection mode, the display segment (5) of the selected welding parameter within the partitioned function curve (4) of the welding parameter display unit (2) is lit at full, undimmed luminosity by the associated lighting means, whilst the display segments (5) of the other, unselected welding parameters within the partitioned function curve (4) of the welding parameter display unit (2) are lit at a dimmed luminosity by the associated lighting means.

2. Control panel according to claim 1,
wherein the manually actuable control element (3) comprises an incrementally settable control wheel.

3. Control panel according to either claim 1 or claim 2,
wherein the display segment (5) of the partitioned function curve (4) of the welding parameter display unit (2) comprises a transparent plastics material block which can be lit by one or more dimmable lighting means, in particular light-emitting diodes (LEDs).

4. Control panel according to claim 3,
wherein the face of each transparent plastics material block of a display segment (5) of the partitioned function curve (4) directed towards the user is surface-treated to increase the light dispersion.

5. Control panel according to any of claims 1 to 4,
wherein, in the welding parameter display mode, the display segment (5) of the currently active welding parameter physically set by the welding power source (11) of the welding tool (SG) within the partitioned function curve (4) of the welding parameter display unit (2) is lit at a dimmed luminosity by the associated lighting means.

6. Control panel according to any of preceding claims 1 to 5,
wherein the welding panel (1) comprises at least one digital display (9, 10) for displaying a parameter value of a welding parameter selected in the welding parameter selection mode or of a welding parameter actively set by the welding power source (11) of the welding tool (SG) during a welding process.

7. Welding tool (SG), **characterised by** a control panel (1) according to any of preceding claims 1 to 6 and a welding power source (11) for setting welding parameters during the welding process in accordance with the parameter values, set in the welding parameter editing mode, of the welding parameters selected in the welding parameter selection mode.

8. Method for configuring welding parameters of a welding tool (SG) by means of a manually actuable control panel (1) of the welding tool (SG) according to claim 7, **characterised in that**, for each welding parameter to be configured, the following steps are performed:
(a) switching (S1) the control panel (1) into a welding parameter selection mode by pulling or pushing a control element (3) of the control panel (1),
(b) turning (S2) the control element (3) in the welding parameter selection mode to select the welding parameter which is to be configured,
(c) switching (S3) from the welding parameter selection mode into a welding parameter editing mode of the welding tool (SG) by pushing the control element (3) of the control panel (1) again, and
(d) turning (S4) the control element (3) in the welding parameter editing mode to set a parameter value of the selected welding parameter which is to be configured,
wherein, after a welding process performed by the welding tool (SG) is started, the control panel (1) switches into a welding parameter display mode, wherein, in the welding parameter display mode, after the welding process is started, the welding parameters are displayed sequentially in a partitioned function curve (4) of the welding parameter display unit (2) of the control panel (1) in different successive phases of the welding process in accordance with the parameter value set in the welding parameter editing mode, and are physically set by a welding power source (11) of the welding tool (SG) to perform the welding process;
wherein each welding parameter is displayed by an associated display segment (5) of a partitioned function curve (4) of the welding parameter display unit (2);
wherein, in the welding parameter editing mode, the display segment (5) of the selected welding parameter within the partitioned function curve (4) of the welding parameter display unit (2) is lit at full, undimmed luminosity by the associated lighting means, whilst the display segments (5) of the other, unselected welding parameters within the partitioned function curve (4) of the welding parameter display unit (2) are not lit by the associated lighting means; and
wherein, in the welding parameter selection mode, the display segment (5) of the selected welding parameter within the partitioned function curve (4) of the welding parameter display unit (2) is lit at full, undimmed luminosity by the associated lighting means, whilst the display segments (5) of the other, unselected welding parameters within the partitioned function curve (4) of the welding parameter display unit (2) are lit at a dimmed luminosity by the associated lighting means.

9. Method according to claim 8,
wherein the parameter value, set in the welding parameter editing mode, of the welding parameter which is to be configured is stored in a data store of the welding tool (SG) and, during a subsequent welding process performed by a welding power source (11) of the welding tool (SG), is read out from the data store and physically set.

## Revendications

1. Panneau de commande (1) pour un appareil de soudage (SG) comportant :
- une unité d'affichage des paramètres de soudage (2) pour afficher les paramètres de soudage et
- au moins un élément de commande (3) pouvant être actionné manuellement par un utilisateur,
le panneau de commande (1) pouvant peut être commuté entre un mode de sélection des paramètres de soudage et un mode d'édition des paramètres de soudage en actionnant l'élément de commande (3) ;
dans le mode de sélection des paramètres de soudage, un des paramètres de soudage de l'unité d'affichage des paramètres de soudage (2) pouvant être sélectionné en tournant l'élément de commande (3) ;
dans le mode d'édition des paramètres de soudage, une valeur de paramètre d'un paramètre de soudage sélectionné de l'unité d'affichage des paramètres de soudage (2) pouvant être réglée en tournant l'élément de commande (3) ;
**caractérisé en ce que**
le panneau de commande (1) est réglé de telle sorte que, après le démarrage d'une opération de soudage exécutée par l'appareil de soudage (SG), il passe dans un mode d'affichage des paramètres de soudage ;
les paramètres de soudage sont affichés séquentiellement dans une courbe de fonction partitionnée (4) de l'unité d'affichage des paramètres de soudage (2) du panneau de commande (1) après le démarrage de l'opération de soudage dans le mode d'affichage des paramètres de soudage dans différentes phases successives de l'opération de soudage en fonction de la valeur de paramètre réglée dans le mode d'édition des paramètres de soudage et sont réglés physiquement pour effectuer l'opération de soudage par une source de courant de soudage (11) de l'appareil de soudage (SG) ;
un paramètre de soudage est respectivement indiqué par un segment d'affichage associé (5) d'une courbe de fonction partitionnée (4) de l'unité d'affichage des paramètres de soudage (2) ;
dans le mode d'édition des paramètres de soudage, le segment d'affichage (5) du paramètre de soudage sélectionné à l'intérieur de la courbe de fonction partitionnée (4) de l'unité d'affichage des paramètres de soudage (2) est éclairé par les moyens d'éclairage associés avec une intensité lumineuse totale non atténuée, tandis que les segments d'affichage (5) des autres paramètres de soudage non sélectionnés à l'intérieur de la courbe de fonction partitionnée (4) de l'unité d'affichage des paramètres de soudage (2) ne sont pas éclairés par les moyens d'éclairage associés ; et
dans le mode de sélection des paramètres de soudage, le segment d'affichage (5) du paramètre de soudage sélectionné à l'intérieur de la courbe de fonction partitionnée (4) de l'unité d'affichage des paramètres de soudage (2) est éclairé par les moyens d'éclairage associés avec une intensité lumineuse totale non atténuée, tandis que les segments d'affichage (5) des autres paramètres de soudage non sélectionnés à l'intérieur de la courbe de fonction partitionnée (4) de l'unité d'affichage des paramètres de soudage (2) sont éclairés par les moyens d'éclairage associés avec une intensité lumineuse atténuée.

2. Panneau de commande selon la revendication 1,
dans lequel l'élément de commande (3) actionnable manuellement présente une molette de commande réglable par incréments.

3. Panneau de commande selon la revendication 1 ou 2,
dans lequel le segment d'affichage (5) de la courbe de fonction partitionnée (4) de l'unité d'affichage des paramètres de soudage (2) présente un bloc en matière plastique transparente qui peut être éclairé par un ou plusieurs moyens d'éclairage atténuables, en particulier des diodes électroluminescentes, LED.

4. Panneau de commande selon la revendication 3,
dans lequel la surface orientée vers l'utilisateur de chaque bloc en matière plastique transparente d'un segment d'affichage (5) de la courbe de fonction partitionnée (4) est traitée en surface pour augmenter la diffusion de la lumière.

5. Panneau de commande selon l'une des revendications 1 à 4 précédentes,
dans lequel, dans le mode d'affichage des paramètres de soudage, le segment d'affichage (5) du paramètre de soudage actuellement actif réglé physiquement par la source de courant de soudage (11) de l'appareil de soudage (SG) est éclairé à l'intérieur de la courbe de fonction partitionnée (4) de l'unité d'affichage des paramètres de soudage (2) par les moyens d'éclairage associés avec une intensité lumineuse atténuée.

6. Panneau de commande selon l'une des revendications 1 à 5 précédentes,
dans lequel le panneau de commande (1) présente au moins un affichage numérique (9, 10) pour afficher une valeur de paramètre d'un paramètre de soudage sélectionné dans le mode de sélection des paramètres de soudage ou d'un paramètre de soudage réglé pour être actif pendant l'opération de soudage par la source de courant de soudage (11) de l'appareil de soudage (SG).

7. Appareil de soudage (SG) **caractérisé par** un panneau de commande (1) selon l'une des revendications 1 à 6 précédentes et une source de courant de soudage (11) pour régler des paramètres de soudage pendant l'opération de soudage en fonction des valeurs de paramètres réglées dans le mode d'édition des paramètres de soudage des paramètres de soudage sélectionnés dans le mode de sélection des paramètres de soudage.

8. Procédé de configuration de paramètres de soudage d'un appareil de soudage (SG) au moyen d'un panneau de commande (1) pouvant être actionné manuellement de l'appareil de soudage (SG) selon revendication 7,
**caractérisé en ce que**, pour chaque paramètre de soudage à configurer, les étapes suivantes sont exécutées :
(a) commuter (S1) le panneau de commande (1) dans un mode de sélection des paramètres de soudage en tirant ou poussant un élément de commande (3) du panneau de commande (1),
(b) tourner (S2) l'élément de commande (3) dans le mode de sélection des paramètres de soudage pour sélectionner le paramètre de soudage à configurer,
(c) passer (S3) du mode de sélection des paramètres de soudage dans un mode d'édition des paramètres de soudage de l'appareil de soudage (SG) en appuyant à nouveau sur l'élément de commande (3) du panneau de commande (1), et
(d) tourner (S4) l'élément de commande (3) dans le mode d'édition des paramètres de soudage pour régler une valeur de paramètre du paramètre de soudage sélectionné à configurer,
dans lequel, après le démarrage d'une opération de soudage exécutée par l'appareil de soudage (SG), le panneau de commande (1) passe dans un mode d'affichage des paramètres de soudage, les paramètres de soudage étant affichés séquentiellement dans une courbe de fonction partitionnée (4) de l'unité d'affichage des paramètres de soudage (2) du panneau de commande (1) après le démarrage de l'opération de soudage dans le mode d'affichage des paramètres de soudage dans différentes phases successives de l'opération de soudage en fonction de la valeur de paramètre réglée dans le mode d'édition des paramètres de soudage et réglés physiquement pour effectuer l'opération de soudage par une source de courant de soudage (11) de l'appareil de soudage (SG) ;
dans lequel, dans le mode d'édition des paramètres de soudage, un segment d'affichage (5) du paramètre de soudage sélectionné à l'intérieur de la courbe de fonction partitionnée (4) de l'unité d'affichage des paramètres de soudage (2) est éclairé par les moyens d'éclairage associés avec une intensité lumineuse totale non atténuée, tandis que les segments d'affichage (5) des autres paramètres de soudage non sélectionnés à l'intérieur de la courbe de fonction partitionnée (4) de l'unité d'affichage des paramètres de soudage (2) ne sont pas éclairés par les moyens d'éclairage associés ; et
dans lequel, dans le mode de sélection des paramètres de soudage, le segment d'affichage (5) du paramètre de soudage sélectionné à l'intérieur de la courbe de fonction partitionnée (4) de l'unité d'affichage des paramètres de soudage (2) est éclairé par les moyens d'éclairage associés avec une intensité lumineuse totale non atténuée, tandis que les segments d'affichage (5) des autres paramètres de soudage non sélectionnés à l'intérieur de la courbe de fonction partitionnée (4) de l'unité d'affichage des paramètres de soudage (2) sont éclairés par les moyens d'éclairage associés avec une intensité lumineuse atténuée.

9. Procédé selon la revendication 8,
dans lequel la valeur de paramètre du paramètre de soudage à configurer, réglée dans le mode d'édition des paramètres de soudage, est enregistrée dans une mémoire de données de l'appareil de soudage (SG) et est lue dans la mémoire de données et réglée physiquement pendant une opération de soudage ultérieure exécutée par une source de courant de soudage (11) de l'appareil de soudage (SG).
